# EUROPEAN PATENT SPECIFICATION

(11) **EP 0 811 152 B1**
(45) Date of publication and mention of the grant of the patent: **26.07.2000**
(21) Application number: 96901206.1
(22) Date of filing: 07.02.1996
(51) Int. Cl.: G01M 3/32, F02M 25/08

(54) **FUEL VAPOR LEAK DETECTION SYSTEM**
SYSTEM ZUR LECKERKENNUNG VON BRENNSTOFFDÄMPFEN
DISPOSITIF DE DETECTION DE FUITES DE VAPEURS DE CARBURANT

(30) Priority: 24.02.1995 US 393952
(43) Date of publication of application: 10.12.1997
(73) Proprietor: SIEMENS CANADA LIMITED, Mississauga, Ontario L5N 7A6 (CA)
(72) Inventor: PERRY, Paul, D., Chatham, Ontario N7L 2C3 (CA); COOK, John, E., Chatham, Ontario N7L 2S8 (CA)
(74) Representative: Allen, Derek
(86) International application number: PCT/CA96/00075
(87) International publication number: WO 96/26427

(56) References cited:
- US-A- 5 390 645

## Description

### Reference to a Related Application

In certain respects this is an improvement on the inventors' prior application entitled "Fuel Vapor Leak Detection System", Serial No. 08/205,983, filed March 4, 1994, now U.S. Patent No. 5,390,645, issued February 21, 1995.

### Field of the Invention

This invention relates to an on-board system for detecting fuel vapor leakage from an evaporative emission control system of an automotive vehicle.

### Background and Summary of the Invention

The referenced patent application discloses a leak detection system that employs a differential flow sensing principle for detecting fuel vapor leakage from the evaporative emission system of an automotive vehicle during a leakage test that involves closing the canister purge solenoid (CPS) valve and then positively pressurizing that portion of the evaporative emission system that is upstream of the CPS valve relative to the engine. One of the significant advantages of that leak detection system is that it less complicated, and hence more economical and reliable, than prior systems not using the differential flow sensing principle.

While the present invention also utilizes a differential flow sensing principle, it does so in a new and unique way that is less influenced by certain variables, such as ambient temperature, pressure, engine manifold vacuum, or supply voltage. Accordingly, a leak detection system embodying principles of the present invention possesses potential for improved accuracy and for avoiding false readings that might otherwise arise on account of such variables. More specifically, the inventive leak detection system is capable of canceling out effects of three external variables by comparing the leakage flow with a known calibrated reference leakage. The inventive leak detection system also eliminates the need for a relatively expensive pressure transducer used in prior non-differential flow sensing systems to detect pressure decay. It also does not require a canister vent valve used in such prior systems.

Another aspect of the invention relates to the physical integration of certain components of the leak detection system with a fuel vapor collection canister. This aspect provides greater spatial economy (i.e. more compactness) so that when the integrated canister/system is installed in an automotive vehicle, a smaller amount of space is taken up. This savings in space is especially important to many automobile manufacturers, who must build vehicles that comply with both applicable evaporative emission laws and regulations and applicable fuel economy laws and regulations. The integration possesses the further advantage of requiring fewer connections of components in the automotive assembly plant, and this affords the opportunity for installation cost savings while at the same time an opportunity for increased reliability of the installation.

Still another advantage of the invention is that a fuel vapor leak detection test can be performed either when the engine is running or not running.

The foregoing, along with further features, advantages, and benefits of the invention, will be seen in the ensuing description and claims, which are accompanied by drawings. The drawings disclose a presently preferred embodiment of the invention according to the best mode contemplated at this time for carrying out the invention.

### Brief Description of the Drawing

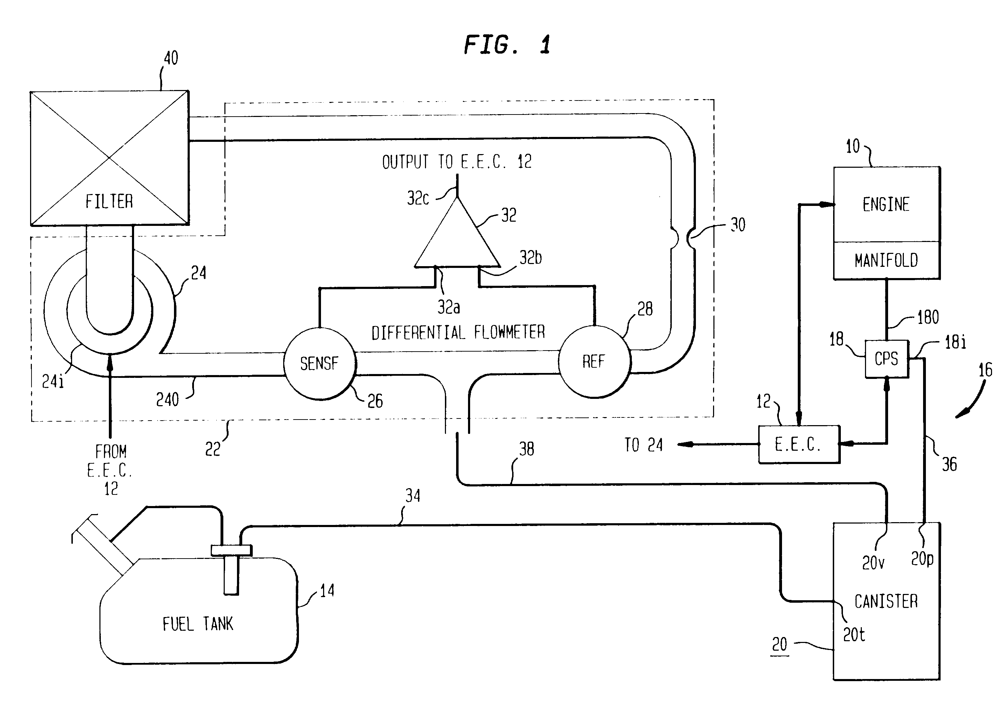

Fig. 1 is a schematic diagram of a fuel vapor leak detection system embodying principles of the invention.

### Description of the Preferred Embodiment

Fig. 1 shows an exemplary application of the inventive principles to an automotive vehicle that is powered by an internal combustion engine 10 that is controlled by an electronic engine control 12. The vehicle comprises a fuel tank 14 for storing a volatile fuel such as gasoline that is vaporized and combusted in the engine's combustion chamber space.

The associated evaporative emission control system is designated generally by the reference numeral 16 and comprises: the usual canister purge solenoid (CPS) valve 18 having inlet and outlet ports 18i and 18o respectively; and a vapor collection canister (sometimes called a charcoal canister) 20 having a tank port 20t, a vent port 20v, and purge port 20p.

The leak detection system embodying principles of the invention is shown generally at 22 and comprises a pressure source 24, in the form of a device (preferably electrically operated, but alternatively operable by a mechanical input) that, when operated during a test, is capable of pressurizing the evaporative emission space under test, and that, when not being operated, provides venting of the canister vent port to atmosphere. An example of such a device 24 is an electric motor driven impeller pump having an inlet 24i and an outlet 24o.

Leak detection system 22 further comprises a series flow path comprising a first flow sensor 26, a second flow sensor 28, and a calibrated orifice 30 in that order. Flow sensors 26, 28, in cooperation with a differential amplifier 32, form a differential flow sensor for sensing the difference in flow through the respective flow sensors. An exemplary device that can be used for each flow sensor is a thermistor, with the two thermistors being connected in electric circuitry that is connected to respective inputs 32a, 32b of differential amplifier 32. Amplifier 32 functions to take the difference between the two flows through the respective flow meters and provide at its output 32c, an output signal that is indicative of the flow differential. This output signal is delivered to engine control 12, which is a conventional processor programmed to conduct a leak detection test, in addition to controlling other engine functions, including possibly other types of diagnostic tests.

Canister tank port 20t is coupled with headspace of tank 14 via a conduit 34; purge port 20p is coupled with inlet port 18i of CPS valve 18 via a conduit 36; and vent port 20v is coupled with leak detection system 22 via a conduit 38 that forms a branch circuit that tees into the aforementioned series flow path at a location between the two flow sensors. Outlet port 18o of CPS valve 18 is coupled to the intake manifold vacuum that is produced by engine 10 when running.

When no leakage test is being performed, CPS valve 18 is operated by engine control 12 to periodically purge the vapor stored in canister 20 to the engine. The exact scheduling of such purging is controlled by the vehicle manufacturer's requirements.

When a leak detection test is to be conducted on the evaporative emission control system, CPS valve 18 is operated closed by control 12, and pressure source 24 is operated to beginning drawing outside air through a filter 40 and begin pressurizing that portion of the evaporative emission space comprising tank 14, conduit 34, canister 20, conduit 38, and conduit 36 up to the closed CPS valve. Naturally the vehicle tank filler cap must be in place to close the tank filler tube.

The series flow path formed by the two sensors 26, 28 and calibrated orifice 30 conducts all or a portion of the flow from pressure source 24 back to atmosphere through filter 40. Once pressure source 24 has been operated long enough to build the pressure inside the evaporative emission space being tested to a predetermined positive pressure relative to atmosphere, a leakless evaporative emission space, as defined above, will result in no flow through the branch conduit 38, while the entire flow from device 24 will pass through the series flow path composed of the two flow sensors and calibrated orifice. Under this condition, equal signals will be input to differential amplifier 32 so that a signal indicative of no leakage will be given by the amplifier for logging in memory of control 12.

On the other hand, if there is some leakage from the defined evaporative emission space once the pressure source has been operated long enough to build the pressure to a desired predetermined positive pressure relative to atmosphere, then some portion of the flow out of device 24 will flow through branch conduit 38 after having passed through sensor 26 in accompaniment of the remainder that proceeds to pass through sensor 28 and orifice 30. Since the flow through sensor 28 and orifice 30 will now be less than the flow through sensor 26, a difference in input signals will be detected by differential amplifier 32 and a corresponding leakage signal will be given to control 12 for logging in its memory. If the signal is larger than a predefined value, it indicates the presence of unacceptable leakage; a lesser signal indicates the absence of unacceptable leakage.

The broken line that bounds leak detection system 22 in Fig. 1 is intended to show that the various components within its confines can form an assembly that directly mounts on the top of canister 20. Such a physical integration of components provides more compactness for a canister/leak detection system and requires fewer connections of components in an automotive assembly plant, affording the opportunity for installation cost savings while at the same time an opportunity for increased installation reliability.

While a presently preferred embodiment of the invention has been illustrated and described, it is to be appreciated that the principles may be practiced in other equivalent ways within the scope of the following claims.

## Claims

1. A fuel vapor leak detection system (22) for use in en engine-powered automotive vehicle having an evaporative emission control system (16) including a fuel vapor collection canister (20) with a canister purge valve (18), a fuel tank (14) for storing volatile fuel that is combusted in a combustion chamber space of an engine (10) and being operatively associated with the fuel vapor collection canister (20) that collects volatized fuel from the tank (14), said canister purge valve (18) being periodically operated to purge collected vapor from the canister (20) to the engine (10), said leak detection system (22) being operatively associated with the evaporative emission control system (16) for detecting leakage from that portion of the evaporative emission control system (16) which is upstream of an inlet of the canister purge valve (18) relative to the engine (10), and comprising pressurizing means (24) having an inlet (24i) at which a source of gaseous medium is available to be pressurized by said pressurizing means (24) and an outlet (24o) at which positively pressurized medium is made available for delivery to said portion of the evaporative emission control system;
characterized by a series flow path from said outlet ( 240) of said pressurizing means (24) back to said source of gaseous medium, said series flow path comprising a first flow sensor (26) for sensing the entire flow from said outlet (24o) of said pressurizing means (24), a second flow sensor (28) for sensing flow through a portion of said series flow path that is downstream of said first flow sensor (26) and a calibrated orifice means (30) also disposed in said portion of said series flow path that is downstream of said second flow sensor (28);
a branch flow path (38) that branches to said portion of said evaporative emission control system (16) from said series flow path at a location in said series flow path that is between said first flow sensor (26) and said second flow sensor (28);
and means (32) for sensing differential between flow sensed by said first flow sensor (26) and flow sensed by said second flow sensor (28).

2. A fuel vapor leak detection system (22) as claimed in Claim 1, in which said pressurizing means comprises an electrically operated impeller pump (24).

3. A fuel vapor leak detection system as claimed in Claim 2, in which said electrically operated impeller pump (24) is physically mounted on said canister (20).

4. A fuel vapor leak detection system as claimed in Claim 2 or Claim 3, in which said electrically operated impeller pump, when not being operated, serves to provide a vent from said evaporative emission control system (16) to said source of gaseous medium.

5. A fuel vapor leak detection system as claimed in Claim 4, in which said electrically operated impeller pump (24), when not being operated, serves to provide a vent from said first flow sensor (26) to said source of gaseous medium.

6. A fuel vapor leak detection system as claimed in Claims 2, 3, 4 or 5, including a filter (40) through which said electrically operated impeller pump (24), when not being operated, serves to provide a vent from said evaporative emission control system (16) by way of said first flow sensor (26) to said source of gaseous medium.

7. A fuel vapor leak detection system as claimed in any preceding Claim, in which said source of gaseous medium is atmospheric air.

8. A fuel vapor leak detection system as claimed in Claim 1, including a filter (40) through which said pressurizing means (24), when not being operated, serves to provide a vent from said evaporative emission control system (16) to said source of gaseous medium.

9. A fuel vapor leak detection system as claimed in any preceding Claim, in which said means (32) for sensing differential between flow sensed by said first flow sensor (26) and flow sensed by said second flow sensor (28) comprises a differential amplifier.

## Patentansprüche

1. Kraftstoffdampfleckdetektionssystem (22) zur Verwendung in einem motorbetriebenen Kraftfahrzeug mit einem Verdampfungsemissionssteuersystem (16), das einen Kraftstoffdampfsammelbehälter (20) mit einem Behälterablaßventil (18) aufweist, und einem Kraftstofftank (14) zum Lagern von flüchtigem Kraftstoff, der in einer Brennkammer eines Motors (10) verbrannt wird, welcher dem Kraftstoffdampfsammelbehälter (20) zugeordnet ist, der verflüchtigten Kraftstoff vom Tank (14) sammelt, wobei das Behälterablaßventil (18) periodisch betätigt wird, um angesammelten Dampf vom Behälter (20) zum Motor (10) abzulassen, und das Leckdetektionssystem (22) dem Verdampfungsemissionssteuersystem (16) zugeordnet ist, um ein Lecken von dem Abschnitt des Verdampfungsemissionssteuersystem (16) zu detektieren, der aufstromseitig eines Einlasses des Behälterablaßventils (18) relativ zum Motor (10) angeordnet ist, und wobei das Leckdetektionssystem Einrichtungen (24) zum Unterdrucksetzen mit einem Einlaß (24i), an dem eine Quelle eines gasförmigen Mediums zur Verfügung steht, um von den Einrichtungen (24) unter Druck gesetzt zu werden, und einem Auslaß (24o), an dem ein unter einen positiven Druck gesetztes Medium zur Zuführung in den Abschnitt des Verdampfungsemissionssteuersystems zur Verfügung gestellt wird, aufweist,
gekennzeichnet durch eine serielle Strömungsbahn vom Auslaß (24o) der Einrichtungen (24) zum Unterdrucksetzen zurück zur Quelle des gasförmigen Mediums, wobei die serielle Strömungsbahn einen ersten Durchflußmesser (26) zum Messen des gesamten Durchflusses vom Auslaß (24o) der Einrichtungen (24) zum Unterdrucksetzen, und einen zweiten Durchflußmesser (28) zum Messen des Durchflusses durch einen Abschnitt der seriellen Strömungsbahn, der sich abstromseitig des ersten Durchflußmessers (26) und einer kalibrierten Öffnungseinrichtung (30) befindet, die ebenfalls in dem Abschnitt der seriellen Strömungsbahn angeordnet ist, der abstromseitig des zweiten Durchflußmessers (28) vorgesehen ist, umfaßt,
eine Zweigströmungsbahn (38), die zu dem Abschnitt des Verdampfungsemissionssteuersystems (16) von der seriellen Strömungsbahn an einer Stelle in der serielen Strömungsbahn abzweigt, die zwischen dem ersten Durchflußmesser (26) und dem zweiten Durchflußmesser (28) liegt, und
Einrichtungen (32) zum Erfassen einer Differenz zwischen dem vom ersten Durchflußmesser (26) und dem vom zweiten Durchflußmesser (28) gemessenen Durchfluß.

2. Kraftstoffdampfleckdetektionssystem (22) nach Anspruch 1, bei dem die Einrichtungen zum Unterdrucksetzen eine elektrisch betätigte Flügelradpumpe (24) aufweisen.

3. Kraftstoffdampfleckdetektionssystem nach Anspruch 2, bei dem die elektrisch betätigte Flügelradpumpe (24) physikalisch am Behälter (20) montiert ist.

4. Kraftstoffdampfleckdetektionssystem nach Anspruch 2 oder 3, bei dem die elektrisch betätigte Flügelradpumpe, wenn sie nicht in Betrieb ist, dazu dient, eine Entlüftung vom Verdampfungsemissionssteuersystem (16) zur Quelle des gasförmigen Mediums durchzuführen.

5. Kraftstoffdampfleckdetektionssystem nach Anspruch 4, bei dem die elektrisch betätigte Flügelradpumpe (24), wenn sie nicht in Betrieb ist, dazu dient, eine Entlüftung vom ersten Durchflußmesser (26) zur Quelle des gasförmigen Mediums durchzuführen.

6. Kraftstoffdampfleckdetektionssystem nach Anspruch 2, 3, 4 oder 5 mit einem Filter (40), durch den die elektrisch betriebene Flügelradpumpe (24), wenn sie nicht in Betrieb ist, eine Entlüftung vom Verdampfungsemissionssteuersystem (16) mit Hilfe des ersten Durchflußmessers (26) zur Quelle des gasförmigen Mediums vorsieht.

7. Kraftstoffdampfleckdetektionssystem nach einem der vorangehenden Ansprüche, bei dem die Quelle des gasförmigen Mediums atmosphärische Luft ist.

8. Kraftstoffdampfleckdetektionssystem nach Anspruch 1 mit einem Filter (40), durch den die Einrichtungen (24) zum Unterdrucksetzen, wenn sie nicht in Betrieb sind, eine Entlüftung vom Verdampfungsemissionssteuersystem (16) zur Quelle des gasförmigen Mediums vorsehen.

9. Kraftstoffdampfleckdetektionssystem nach einem der vorangehenden Ansprüche, bei dem die Einrichtungen (32) zur Erfassung einer Differenz zwischen dem vom ersten Durchflußmesser (26) und dem vom zweiten Durchflußmesser (28) gemessenen Durchfluß einen Differenzverstärker umfassen.

## Revendications

1. Système (22) de détection de fuite de vapeurs de carburant destiné à être utilisé dans un véhicule automobile à moteur pourvu d'un système (16) de commande d'émission d'évaporation comprenant une cartouche filtrante (20) de collection de vapeurs de carburant pourvue d'une vanne (18) de purge de cartouche filtrante, un réservoir de carburant (14) destiné à stocker le carburant volatil qui est brûlé dans un espace de chambre de combustion d'un moteur (10) et est associé en fonctionnement à la cartouche filtrante (20) de collection de vapeurs de carburant qui collecte le carburant volatilisé par le réservoir (14), ladite vanne (18) de purge de cartouche filtrante étant mise en fonctionnement périodiquement pour purger la vapeur collectée dans la cartouche filtrante (20) vers le moteur (10), ledit système (22) de détection de fuite étant associé en fonctionnement au système (16) de commande d'émission d'évaporation pour détecter une fuite de la partie du système (16) de commande d'émission d'évaporation située en amont d'une entrée de la vanne (18) de purge de cartouche filtrante relative au moteur (10), et comprenant des moyens (24) de mise sous pression pourvus d'une entrée (24i) communiquant avec une source de milieu gazeux pouvant être mis sous pression et d'une sortie (240) de laquelle ce milieu peut déboucher après avoir été mis sous pression positive avant de rejoindre ladite partie du système de commande d'évaporation;
caractérisé par un chemin d'écoulement en série à partir de ladite sortie (240) dudit moyen de mise sous pression (24) en retour vers ladite source de milieu gazeux, ledit chemin d'écoulement en série comprenant un premier capteur de débit (26) destiné à détecter le débit entier à ladite sortie (240) dudit moyen de mise sous pression (24), un deuxième capteur de débit (28) destiné à détecter le débit dans une partie dudit chemin d'écoulement en série située en aval dudit premier capteur de débit (26) et des moyens d'orifice calibré (30) également disposés dans ladite partie dudit chemin d'écoulement en série située en aval dudit deuxième capteur de débit (28) ;
un chemin d'écoulement de branchement (38) qui se branche sur ladite partie dudit système (16) de commande d'émission d'évaporation à partir dudit chemin d'écoulement en série à un endroit dans ledit chemin d'écoulement en série situé entre ledit premier capteur de débit (26) et ledit deuxième capteur de débit (28) ;
et un moyen (32) destiné à détecter une différence entre le débit détecté par ledit premier capteur de débit (26) et le débit détecté par le ledit deuxième capteur de débit (28).

2. Système (22) de détection de fuite de vapeurs de carburant selon la revendication 1, dans lequel ledit moyen de mise sous pression comprend une pompe à roue (24) actionnée à l'électricité.

3. Système de détection de fuite de vapeurs de carburant selon la revendication 2, dans lequel ladite pompe à roue (24) actionnée à l'électricité est montée physiquement sur ladite cartouche filtrante (20).

4. Système de détection de fuite de vapeurs de carburant selon la revendication 2 ou la revendication 3, dans lequel ladite pompe à roue actionnée à l'électricité, lorsqu'elle ne fonctionne pas, sert à procurer une ventilation dudit système (16) de commande d'émission d'évaporation vers ladite source de milieu gazeux.

5. Système de détection de fuite de vapeurs de carburant selon la revendication 4, dans lequel ladite pompe à roue (24) actionnée à l'électricité, lorsqu'elle ne fonctionne pas, sert à procurer une ventilation dudit premier capteur de débit (26) vers ladite source de milieu gazeux.

6. Système de détection de fuite de vapeurs de carburant selon les revendications 2, 3, 4 ou 5, comportant un filtre (40) par lequel ladite pompe à roue (24) actionnée à l'électricité, lorsqu'elle ne fonctionne pas, sert à procurer une ventilation dudit système (16) de commande d'émission d'évaporation au moyen dudit premier de capteur de débit (26) vers ladite source de milieu gazeux.

7. Système de détection de fuite de vapeurs de carburant selon l'une quelconque des revendications précédentes, dans lequel ladite source de milieu gazeux est l'air atmosphérique.

8. Système de détection de fuite de vapeurs de carburant selon la revendication 1, comportant un filtre (40) par lequel ledit moyen de mise sous pression (24), lorsqu'il ne fonctionne pas, sert à procurer une ventilation dudit système (16) de commande d'émission d'évaporation vers ladite source de milieu gazeux.

9. Système de détection de fuite de vapeurs de carburant selon l'une quelconque des revendications précédentes, dans lequel ledit moyen (32) destiné à détecter une différence entre le débit détecté par ledit premier détecteur de débit (26) et le débit détecté par ledit deuxième détecteur de débit (28) comprend un amplificateur différentiel.
